# EUROPEAN PATENT SPECIFICATION

(11) **EP 0 931 603 B1**
(45) Date of publication and mention of the grant of the patent: **14.05.2003**
(21) Application number: 98830034.9
(22) Date of filing: 27.01.1998
(51) Int. Cl.: B21D 43/11, B23Q 7/04

(54) **Machine for working sheet metal**
Blechbearbeitungsmaschine
Machine à travailler la tôle

(43) Date of publication of application: 28.07.1999
(73) Proprietor: RAINER S.r.l., I-40012 Calderara di Reno (Bologna) (IT)
(72) Inventor: Perazzolo, Eugenio, 45100 Rovigo (IT); Raimondi, Stefano, 40133 Bologna (IT)
(74) Representative: Jorio, Paolo

(56) References cited:
- EP-A- 0 796 679
- US-A- 4 523 749
- US-A- 4 658 682
- US-A- 4 669 346
- PATENT ABSTRACTS OF JAPAN vol. 14, no. 315 (M-995), 6 July 1990 & JP 02 104428 A (MURATA MACH LTD), 17 April 1990,

## Description

The present invention relates to a machine for working sheet metal (see for example EP-A-0 796 679).

As is known, machines for working sheet metal substantially comprise a worktable; a work station; and a member for moving a metal sheet on the worktable to and from the work station. The member in turn comprises a carriage movable along a horizontal first axis; a slide carried by the carriage and movable along a horizontal second axis perpendicular to the first axis; and a number of gripper assemblies carried by the slide and each having a gripper for gripping a peripheral edge of the sheet.

In actual use, the gripper assembly positions are selected with respect to the longitudinal axis of the slide according to the length of the edge of the sheet to be engaged by the grippers and the location of the sheet portions to be worked; and, to position the gripper assemblies along the slide, the operator, with the machine off and by means of manual controls, successively : opens the gripper; releases the gripper assembly from the slide; moves the gripper assembly into a predetermined position along the second axis; locks the gripper assembly to the slide; and closes the gripper. All these operations must of course be performed whenever one or more of the grippers is repositioned with respect to the slide, and, when, as often happens, the edge portion of the sheet gripped by one of the grippers is also to be worked, must even be performed twice : once to change the position of the gripper, and a second time to restore the gripper to its original position after the sheet is worked. Positioning the grippers as described above obviously takes a good deal of time and requires the assistance of an operator. What is more, when moving grippers at the work station, the gripper may collide for example with the tool as it is moved with respect to the slide.

One recently designed machine features means for positioning the gripper assemblies, but, as the positioning means comprise an actuating device for each gripper assembly, involves redesigning the gripper assemblies for connection to the respective actuating devices. That is, providing each gripper assembly with a respective actuating device complicates the design of the gripper assembly, and involves considerable cost to manufacture and install the positioning means.

It is an object of the present invention to provide a machine for working sheet metal, designed to overcome the aforementioned drawbacks, i.e. which comprises a gripper actuating device for automatically positioning the grippers along the slide, and designed to solve the above problems.

According to the present invention, there is provided a machine for working sheet metal, comprising:
a worktable on to which, in use, a metal sheet is loaded;
a work station;
a member for moving said sheet on said worktable to and from said work station, said member comprising a carriage movable along a horizontal first axis, a slide carried by said carriage and movable with respect to the carriage along a horizontal second axis perpendicular to said horizontal first axis, and a number of gripper assemblies carried by said slide and each having a gripper for gripping a peripheral edge of said sheet; and
a first device, for each said gripper assembly, for locking and releasing said gripper assembly to and from said slide;
characterized by comprising a device carried by said carriage and having engaging means for engaging a gripper assembly to be positioned with respect to the longitudinal axis of said slide, to connect said gripper assembly to be positioned to said carriage so that translation of said slide along its longitudinal axis changes the position of said gripper assembly to be positioned with respect to the longitudinal axis of said slide.

A preferred non-limiting embodiment of the present invention will be described by way of example with reference to the accompanying drawings, in which:
Figure 1 shows a plan view of a first embodiment of a machine for working sheet metal in accordance with the teachings of the present invention;
Figure 2 shows a partially sectioned view of a sheet handling member;
Figure 3 shows a plan view, with parts removed, of the Figure 2 member;
Figure 4 shows a section of a gripper assembly fitted to the Figure 1 machine;
Figure 5 shows a section of part of the Figure 4 gripper assembly;
Figures 6 to 10 show operation of a device carried by the sheet handling member.

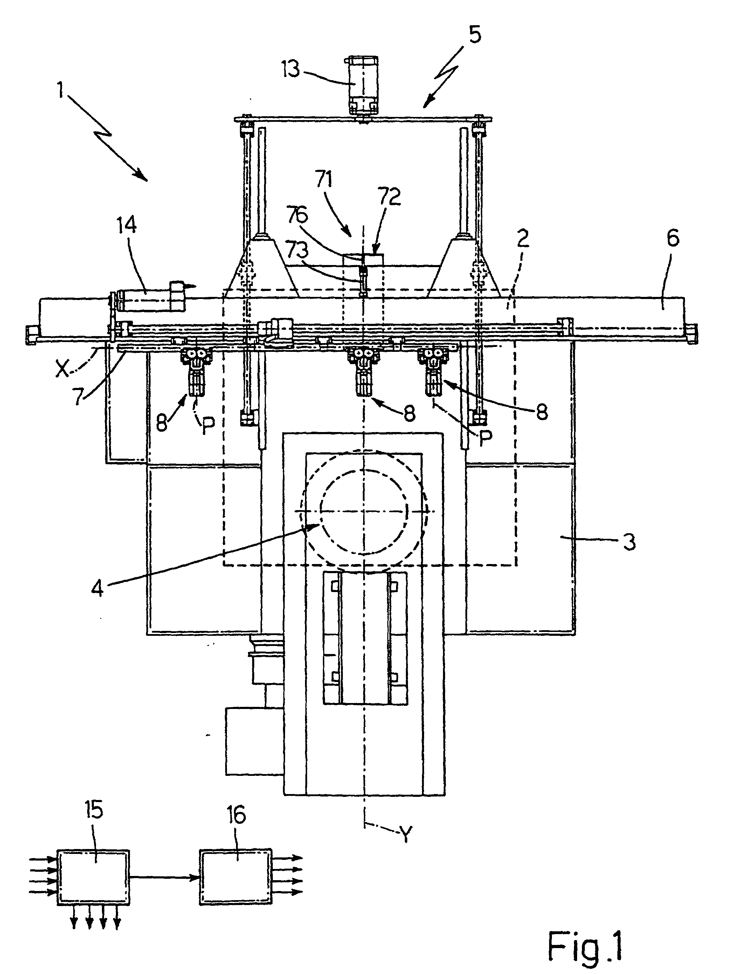

Number 1 in Figure 1 indicates as a whole a machine for working sheet metal, one sheet of which is shown by the dash line and indicated by 2. Machine 1 comprises a known worktable 3; a known work station 4 for punching sheet 2; and a handling member 5 for moving sheet 2 on worktable 3 to and from work station 4. Handling member 5 comprises a carriage 6 movable along a horizontal axis Y; a slide 7 supported by carriage 6 and movable with respect to carriage 6 along a horizontal axis X perpendicular to the Y axis; and a number of gripper assemblies 8 carried by slide 7 and each having a gripper 9 for gripping a peripheral edge of sheet 2.

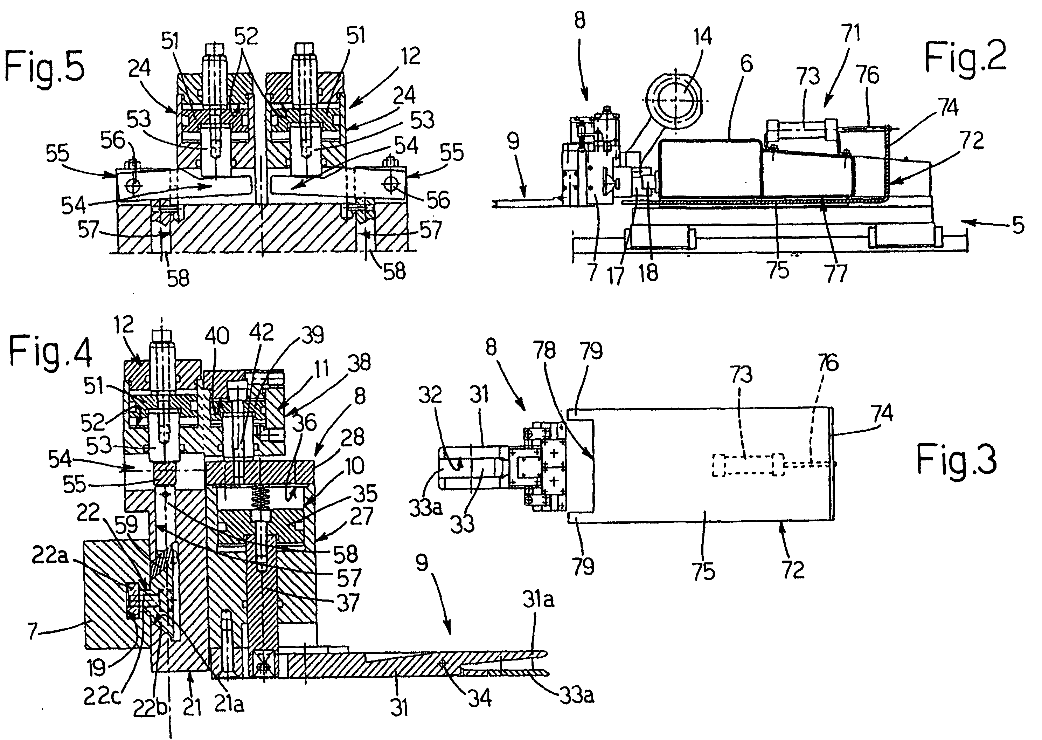

Handling member 5 also comprises, for each gripper assembly 8, a fluidic device 10 (Figure 4) for closing and opening gripper 9; a fluidic device 11 (Figure 4) for regulating the distance between gripper 9 and worktable 3; and a fluidic device 12 (Figure 4) for locking and releasing gripper assembly 8 to and from slide 7. Handling member 5 also comprises drive means 13 for controlling translation of carriage 6 along the Y axis, and drive means 14 for controlling translation of slide 7 along the X axis; means 13 and 14 being known and, in particular, installed on the Applicant's machines. An electronic central control unit 15 controls the work cycle of machine 1, in particular work station 4 and means 13 and 14, and, by means of a fluidic central control unit 16, controls fluidic devices 10, 11 and 12 and other fluidic devices of machine 1.

Carriage 6 is defined by a longitudinal member with a longitudinal axis parallel to the X axis; slide 7 is also defined by a longitudinal member of longitudinal axis X, and having skids 17 which cooperate with a guide 18 formed along carriage 6 and by which slide 7 travels along the X axis; and the face of slide 7 facing work station 4 comprises a groove 19 (Figure 4) with a T-shaped cross section and a longitudinal axis parallel to the X axis.

With reference to Figures 2, 3, 4 and 5, each gripper assembly 8 comprises a body 21 carried by slide 7 and which, on a face facing slide 7, is supported by a bar 22 with a horizontal longitudinal axis parallel to the X axis. Bar 22 is supported by slide 7, acts as a guide for gripper assemblies 8 when positioning these along an axis parallel to the X axis, and comprises a first portion 22a engaging groove 19, and a second portion 22b engaging with a given clearance a dove-tailed groove 21a formed in body 21. More specifically, portion 22a has a section complementary to that of groove 19; portion 22b is dove-tailed; and portions 22a and 22b are connected to each other by ties 22c.

With reference to Figure 2, gripper assembly 8 also comprises a body 27 movable along a vertical axis and fitted at the bottom with gripper 9 and at the top with a horizontal plate 28. Each gripper 9 extends along a respective horizontal axis P parallel to the Y axis, and comprises a horizontal plate 31, in which a groove 32 is formed along the P axis, and a horizontal central plate 33 housed in groove 32; both plates 31 and 33 extending parallel to the P axis. Gripper 9 comprises a front portion for gripping sheet 2, and which is defined by an end portion 31a of plate 31, and by an end portion 33a of plate 33 at a lower level than portion 31a. Close to portions 31a and 33a, plate 33 pivots on a horizontal pin 34 carried by plate 31; and portions 31a and 33a are reduced in thickness to define, in between, a gap engaged by the edge of sheet 2.

With reference to Figure 4, device 10 is defined by a fluidic actuator housed in body 27 and having a piston 35 sliding along a vertical axis inside a chamber 36 formed in body 27 and closed at the top by plate 28. A rod 37 extends downwards from piston 35 and outside chamber 36, and is hinged to an end portion, opposite portion 33a, of plate 33, so that the travel of piston 35 in chamber 36, and hence of rod 37, rotates plate 33 about pin 34 between a gripping position gripping sheet 2 and a release position.

With reference to Figure 4, gripper assembly 8 comprises a third body 38 at a higher level than bodies 21 and 27; and device 11 is defined by a fluidic actuator housed in body 38 and having a piston 39 sliding along a vertical axis inside a chamber 40 formed in body 38. A rod 42 extends downwards from piston 39 and outside chamber 40, and is mechanically integral at the free end with plate 28, so that the travel of piston 39 in chamber 40, and hence of rod 42, results in vertical translation of body 27 and therefore also of gripper 9. In other words, device 11 provides for adjusting the distance between gripper 9 and worktable 3, and controls the position of gripper 9 with respect to worktable 3 according to the work cycle and possibly also the thickness of sheet 2.

With reference to Figures 4 and 5, device 12 is defined by two fluidic actuators housed in respective portions 24 of body 38, and each having a piston 51 sliding along a vertical axis inside a respective chamber 52 formed in portion 24. A rod 53 extends downwards from piston 51, outside chamber 52 and inside a gap 54 defined between respective portion 24 and the top of body 21. Each gap 54 houses a lever 55, which pivots at a first end on a horizontal pin 56, and which has a second end at which the corresponding rod 53 contacts lever 55 downwards. At each lever 55, body 21 comprises a vertical hole 57 intersecting groove 21a, and in which slides a respective vertical pin 58, which contacts corresponding lever 55 at the top and, by means of a spacer 59, contacts portion 22b of bar 22 at the bottom.

Rod 53 may assume an extracted position, defined by downward travel of the rod, in which lever 55 is pressed downwards so that pin 58 slides down to press portion 22b of bar 22 firmly against contact faces of groove 21a; and a withdrawn position, defined by upward travel of the rod, in which lever 55, not being pressed downwards, exerts no pressure on pin 58, which in turn exerts no pressure on portion 22b of bar 22. The extracted position of rod 53 provides for locking gripper assembly 8 to slide 7, by the pressure of rod 53 pressing portion 22b against contact faces of groove 21a, so that gripper assembly 8 is locked entirely to slide 7 and prevented from translating with respect to slide 7 along an axis parallel to the X axis. Conversely, the withdrawn position of rod 53 provides for releasing gripper assembly 8 from slide 7, so that, when force is exerted on gripper assembly 8 in a direction parallel to the X axis, the clearance between portion 22b and groove 21a enables gripper assembly 8 to translate freely in said direction.

With reference to Figures 1, 2 and 3, machine 1 comprises a device 71 for translating the gripper assemblies along an axis parallel to the X axis. Device 71 is controlled by central control unit 15, and comprises an L-shaped plate 72 movable along an axis parallel to the Y axis, and for engaging and moving a gripper assembly 8 along an axis parallel to the X axis; and a fluidic actuator 73 for moving plate 72 to and from the gripper assembly 8 to be positioned. Plate 72 comprises a vertical portion 74, and a horizontal portion 75 having a longitudinal axis parallel to the Y axis.

Actuator 73 is fitted to the top face of carriage 6, and comprises a rod 76 extending, along a horizontal axis parallel to the Y axis, on the opposite side to work station 4. The free end of rod 76 is fitted to the top end of vertical portion 74 of plate 72, which portion 74 is therefore located on the opposite side of carriage 6 to that supporting slide 7; and portion 75 extends from the bottom end of portion 74 towards the side of carriage 6 supporting slide 7 through a through opening 77 formed in carriage 6. It should be pointed out that the bottom of each gripper assembly 8 is lower down than the bottom of slide 7, and portion 75 is substantially on a level with the bottom of gripper assembly 8 and therefore also lower down than the bottom of slide 7.

With reference to Figure 3, the free end of portion 75 is fork-shaped and comprises a recess 78 defined by two teeth 79. In actual use, portion 75 is movable by actuator 73 into a release position in which said free end is located at and beneath the bottom of slide 7, and an engaged position in which the bottom of gripper assembly 8 to be positioned engages recess 78; for which purpose, the bottom of gripper assembly 8 is slightly narrower than the distance between teeth 79.

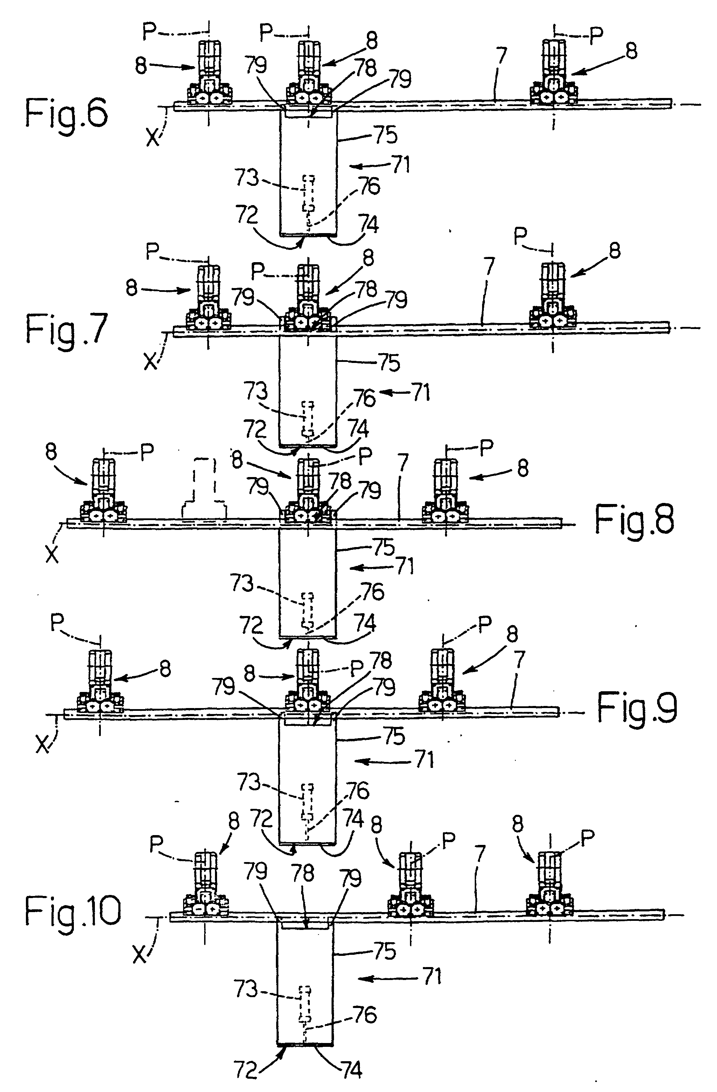

With reference to Figures 6 to 10, to change the position of a gripper assembly 8 with respect to slide 7, either because the portion of sheet 2 gripped by gripper assembly 8 is to be worked, or to prevent a gripper assembly 8 close to station 4 from colliding with the tool, or for any other reason, this is done by means of a series of straightforward operations comprising:
moving slide 7 to bring the gripper assembly up to the free end of portion 75;
activating device 10 of gripper assembly 8 to open gripper 9 and release sheet 2;
activating device 12 of gripper assembly 8 to release gripper assembly 8 from slide 7;
activating device 71 to move plate 72 so that gripper assembly 8 engages recess 78 and is connected to carriage 6;
moving slide 7 to position gripper assembly 8 as required with respect to slide 7;
activating device 12 of the positioned gripper assembly 8 to lock it to slide 7;
activating device 10 to close gripper 9 on to sheet 2; and
activating device 71 to move plate 72 and release the positioned gripper assembly 8 from recess 78.

The numerous advantages of the present invention will be clear from the foregoing description. In particular, a machine is provided which repositions a gripper assembly with respect to the slide in a straightforward manner and by means of an electronic central control unit. Moreover, machine 1 comprises a device for regulating the distance between the gripper and the worktable.

Clearly, changes may be made to machine 1 as described and illustrated herein without, however, departing from the scope of the present invention as defined in the appended claims.

## Claims

1. A machine for working sheet metal, comprising:
a worktable (3) on to which, in use, a metal sheet (2) is loaded;
a work station (4);
a member (5) for moving said sheet (2) on said worktable (3) to and from said work station (4), said member (5) comprising a carriage (6) movable along a horizontal first axis (Y), a slide (7) carried by said carriage (6) and movable with respect to the carriage along a horizontal second axis (X) perpendicular to said horizontal first axis (Y), and a number of gripper assemblies (8) carried by said slide (7) and each having a gripper (9) for gripping a peripheral edge of said sheet (2); and
a first device (12), for each said gripper assembly (8), for locking and releasing said gripper assembly (8) to and from said slide (7);
**characterized by** comprising a device (71) carried by said carriage (6) and having engaging means for engaging a gripper assembly (8) to be positioned with respect to the longitudinal axis of said slide (7), to connect said gripper assembly (8) to be positioned to said carriage (6) so that translation of said slide (7) along its longitudinal axis changes the position of said gripper assembly (8) to be positioned with respect to the longitudinal axis of said slide (7).

2. A machine as claimed in Claim 1, **characterized in that** said device (71) comprises a plate (72) having said engaging means at one end, and movable by means of an actuating device (73) between a release position releasing said gripper assembly (8) to be positioned, and an engaged position engaging said gripper assembly (8) to be positioned.

3. A machine as claimed in Claim 2, **characterized in that** said actuating device is a fluidic actuator (73).

4. A machine as claimed in Claim 3, **characterized in that** said fluidic actuator (73) is carried by said carriage (6), and comprises a rod (76) carrying said plate (72) and extending along a horizontal axis parallel to said first axis (Y).

5. A machine as claimed in Claim 4, **characterized in that** said plate (72) comprises a vertical portion (74) fitted to said rod (76) on the opposite side of said carriage (6) to that supporting said slide (7); and a horizontal portion (75) having a longitudinal axis parallel to said first axis (Y), and extending towards the side of said carriage (6) supporting said slide (7) through a through opening (77) formed in said carriage (6); the bottom of each said gripper assembly (8) being lower down than the bottom of said slide (7); and said horizontal portion (75) being substantially on a level with the bottom of said gripper assembly (8) and therefore lower down than the bottom of said slide (7).

6. A machine as claimed in Claim 5, **characterized in that** said engaging means comprise a fork formed at the free end of said horizontal portion (75) and defined by a recess (78) defined by two teeth (79); said horizontal portion (75) assuming, by means of said fluidic actuator (73), a release position in which said free end is located at and beneath the bottom of said slide (7), and an engaged position in which the bottom of said gripper assembly (8) to be positioned engages said recess (78).

7. A machine as claimed in any one of the foregoing Claims, **characterized in that** said gripper assembly (8) comprises a first body (21); guide means between said first body (21) and said slide (7); a second body (27) carrying said gripper (9); and a second device (11) for vertically translating said second body (27), and hence said gripper (9), to adjust the distance between said gripper (9) and said worktable (3).

8. A machine as claimed in any one of the foregoing Claims, **characterized by** comprising an electronic central control unit (15) for controlling said work station (4), said member (5), said first device (12), and said device (71).

## Patentansprüche

1. Maschine zur Blechbearbeitung, die umfaßt:
einen Arbeitstisch (3), auf den im Gebrauch ein Blech (2) geladen wird;
eine Arbeitsstation (4);
ein Element (5) zum Bewegen des Blechs (2) auf dem Arbeitstisch (3) zu der und von der Arbeitsstation (4), wobei das Element (5) einen Schlitten (6), der längs einer horizontalen ersten Achse (Y) beweglich ist, einen Gleiter (7), der von dem Schlitten (6) getragen wird und in bezug auf den Schlitten längs einer horizontalen zweiten Achse (X), die zu der horizontalen ersten Achse (Y) senkrecht ist, beweglich ist, sowie eine Anzahl von Greifbaueinheiten (8), die von dem Gleiter (7) getragen werden und wovon jede einen Greifer (9) zum Ergreifen einer Umfangskante des Blechs (2) besitzt, umfaßt; und
eine erste Vorrichtung (12) für jede der Greifbaueinheiten (8) zum Verriegeln der Greifbaueinheit (8) an dem bzw. zum Lösen der Greifbaueinheit (8) von dem Gleiter (7);
**gekennzeichnet durch** eine Vorrichtung (71), die von dem Schlitten (6) getragen wird und Eingriffmittel für einen Eingriff mit einer in bezug auf die longitudinale Achse des Gleiters (7) zu positionierenden Greifbaueinheit (8), um die Greifbaueinheit (8), die auf dem Schlitten (6) positioniert werden soll, zu verbinden, so daß die translatorische Verlagerung des Gleiters (7) längs seiner longitudinalen Achse die Position der in bezug auf die longitudinale Achse des Gleiters (7) zu positionierenden Greifbaueinheit (8) ändert, umfaßt.

2. Maschine nach Anspruch 1, **dadurch gekennzeichnet, daß** die Vorrichtung (71) eine Platte (72) umfaßt, die an einem Ende die Eingriffmittel besitzt und durch eine Betätigungsvorrichtung (73) zwischen einer Freigabeposition, in der die zu positionierende Greifbaueinheit (8) freigegeben ist, und einer Eingriffposition, in der die zu positionierende Greifbaueinheit (8) ergriffen ist, beweglich ist.

3. Maschine nach Anspruch 2, **dadurch gekennzeichnet, daß** die Betätigungsvorrichtung ein Fluidaktuator (73) ist.

4. Maschine nach Anspruch 3, **dadurch gekennzeichnet, daß** der Fluidaktuator (73) von dem Schlitten (6) getragen wird und eine Stange (76) umfaßt, die die Platte (72) trägt und sich längs einer horizontalen Achse parallel zu der ersten Achse (Y) erstreckt.

5. Maschine nach Anspruch 4, **dadurch gekennzeichnet, daß** die Platte (72) einen vertikalen Abschnitt (74), der an der Stange (76) auf derjenigen Seite des Schlittens (6) angebracht ist, die jener, die den Gleiter (7) trägt, gegenüberliegt; und einen horizontalen Abschnitt, der eine longitudinale Achse parallel zu der ersten Achse (Y) besitzt und sich zu der dem Gleiter (7) tragenden Seite des Schlittens (6) durch eine in dem Schlitten (6) ausgebildete Durchgangsöffnung (77) erstreckt, umfaßt; wobei sich der Boden jeder der Greifbaueinheiten (8) jeweils unterhalb des Bodens des Gleiters (7) befindet; und wobei sich der horizontale Abschnitt (75) im wesentlichen auf einer Höhe mit dem Boden der Greifbaueinheit (8) befindet und sich daher unterhalb des Bodens des Gleiters (7) befindet.

6. Maschine nach Anspruch 5, **dadurch gekennzeichnet, daß** die Eingriffmittel eine am freien Ende des horizontalen Abschnitts (75) ausgebildete Gabel umfassen, die durch eine durch zwei Zähne (79) definierte Aussparung (78) definiert ist; wobei der horizontale Abschnitt (75) mittels des Fluidaktuators (73) eine Freigabeposition, in der sich das freie Ende bei und unter dem Boden des Gleiters (7) befindet, und eine Eingriffposition, in der der Boden der zu positionierenden Greifbaueinheit (8) mit der Aussparung (78) in Eingriff ist, einnimmt.

7. Maschine nach einem der vorhergehenden Ansprüche, **dadurch gekennzeichnet, daß** die Greifbaueinheit (B) einen ersten Körper (21), Führungsmittei zwischen dem ersten Körper (21) und dem Gleiter (7); einen zweiten Körper (27), der den Greifer (9) trägt; und eine zweite Vorrichtung (11), die den zweiten Körper (27) und daher den Greifer (9) vertikal translatorisch verlagert, um den Abstand zwischen dem Greifer (9) und dem Arbeitstisch (3) einzustellen, umfaßt.

8. Maschine nach einem der vorhergehenden Ansprüche, **gekennzeichnet durch** eine elektronische zentrale Steuereinheit (15), die die Arbeitsstation (4), das Element (5), die erste Vorrichtung (12) und die Vorrichtung (71) steuert.

## Revendications

1. Machine à travailler la tôle, comprenant :
une table de travail (3) sur laquelle, en fonctionnement, une tôle (2) est chargée ;
un poste de travail (4) ;
un organe (5) destiné à déplacer ladite tôle (2) sur ladite table de travail (3) vers et depuis ledit poste de travail (4), ledit organe (5) comprenant un chariot (6) susceptible de se déplacer le long d'un premier axe horizontal (Y), un coulisseau (7) porté par ledit chariot (6) et susceptible de se déplacer par rapport au chariot le long d'un deuxième axe horizontal (X) perpendiculaire au dit premier axe horizontal (Y) et un certain nombre d'ensembles de préhension (8) portés par ledit coulisseau (7), chacun ayant un élément de préhension (9) pour accrocher un bord périphérique de ladite tôle (2) ; et
un premier dispositif (12), pour chacun desdits ensembles de préhension (8), destiné à verrouiller et à libérer ledit ensemble de préhension (8) vers et depuis ledit coulisseau (7) ;
**caractérisée par le fait qu'**elle comprend un dispositif (71) porté par ledit chariot (6) et ayant des moyens d'engagement destinés à venir en prise avec un ensemble de préhension (8) devant être positionné par rapport à l'axe longitudinal dudit coulisseau (7), pour connecter ledit ensemble de préhension (8) devant être positionné audit chariot (6) de sorte que la translation dudit coulisseau (7) le long de son axe longitudinal modifie la position dudit ensemble de préhension (8) devant être positionné par rapport à l'axe longitudinal dudit coulisseau (7).

2. Machine selon la revendication 1, **caractérisée en ce que** ledit dispositif (71) comprend une plaque (72) ayant lesdits moyens d'engagement à une extrémité, et susceptible de se déplacer au moyen d'un dispositif d'actionnement (73) entre une position de libération libérant ledit ensemble de préhension (8) devant être positionné, et une position d'engagement en prise avec ledit ensemble de préhension (8) devant être positionné.

3. Machine selon la revendication 2, **caractérisée en ce que** ledit dispositif d'actionnement est un actionneur fluidique (73).

4. Machine selon la revendication 3, **caractérisée en ce que** ledit actionneur fluidique (73) est porté par ledit chariot (6), et comprend une tige (76) portant ladite plaque (72) et s'étendant le long d'un axe horizontal parallèle au dit premier axe (Y).

5. Machine selon la revendication 4, **caractérisée en ce que** ladite plaque (72) comprend une portion verticale (74) ajustée à ladite tige (76) du côté dudit chariot (6) opposé à celui supportant ledit coulisseau (7) ; et une portion horizontale (75) ayant un axe longitudinal parallèle au dit premier axe (Y) et s'étendant vers le côté dudit chariot (6) supportant ledit coulisseau (7) à travers une ouverture traversante (77) formée dans ledit chariot (6) ; le fond de chaque dit ensemble de préhension (8) étant plus bas que le fond dudit coulisseau (7) ; et ladite portion horizontale (75) étant substantiellement au même niveau que le fond dudit ensemble de préhension (8) et par conséquent plus basse que le fond dudit coulisseau (7).

6. Machine selon la revendication 5, **caractérisée en ce que** lesdits moyens d'engagement comprennent une fourche formée à l'extrémité libre de ladite portion horizontale (75) et définie par un retrait (78) défini par deux dents (79) ; ladite portion horizontale (75) adoptant, par le biais dudit actionneur fluidique (73), une position de libération dans laquelle ladite extrémité libre est située au niveau et en dessous du fond dudit coulisseau (7), et une position en prise dans laquelle le fond dudit ensemble de préhension (8) devant être positionné vient en prise avec ledit retrait (78).

7. Machine selon l'une quelconque des revendications précédentes, **caractérisée en ce que** ledit ensemble de préhension (8) comprend un premier corps (21) ; un moyen de guidage entre ledit premier corps (21) et ledit coulisseau (7) ; un deuxième corps (27) portant ledit élément de préhension (9) ; et un deuxième dispositif (11) pour faire subir une translation verticale au dit deuxième corps (27), et donc au dit élément de préhension (9), pour ajuster la distance entre ledit élément de préhension (9) et ladite table de travail (3).

8. Machine selon l'une quelconque des revendications précédentes, **caractérisée en ce qu'**elle comprend une unité électronique de commande centrale (15) destinée à commander ledit poste de travail (4), ledit organe (5), ledit premier dispositif (12) et ledit dispositif (71).
